# EUROPEAN PATENT APPLICATION

(11) **EP 4 838 011 A1**
(43) Date of publication of application: **11.11.2026**
(21) Application number: 24915713.2
(22) Date of filing: 23.12.2024
(51) Int. Cl.: E02F 9/26

(54) **CONSTRUCTION MACHINE**

(30) Priority: 05.01.2024 JP 2024000822
(71) Applicant: Hitachi Construction Machinery Co., Ltd., Tokyo 110-0015 (JP)
(72) Inventor: SUGAWARA, Takuma, Tsuchiura-shi, Ibaraki 300-0013 (JP); HAGIWARA, Naoki, Tsuchiura-shi, Ibaraki 300-0013 (JP); MIZOGUCHI, Kazuhiko, Tsuchiura-shi, Ibaraki 300-0013 (JP)
(74) Representative: MERH-IP Matias Erny Reichl Hoffmann Patentanwälte PartG mbB
(86) International application number: PCT/JP2024/045413
(87) International publication number: WO 2025/146790

(57) **Abstract**

The construction machine of the present invention includes a lower travel body, an upper swing body swingably mounted on the lower travel body, an operator cab mounted on the upper swing body, imaging devices arranged at least in a front direction and a rear direction of the upper swing body, a display device mounted in the operator cab, and a controller that synthesizes images captured by the imaging devices to generate a bird's-eye image and displays the generated bird's-eye image on the display device. The front imaging device is installed inclined downward so that it can capture an image of an area closer to the upper swing body than an imaging area of the rear imaging device. The controller generates the bird's-eye image including the images captured by the front imaging device and the rear imaging device. This allows the operator to obtain the required information more accurately.

## Description

### Technical Field

The present invention relates to a construction machine.

### Background Art

In construction machines such as hydraulic excavators, it is difficult for the operator to directly see the surroundings of the vehicle body from the operator cab mounted on the upper swing body. Therefore, a technology is known that assists the operator's view by creating a bird's-eye image from images captured by a plurality of imaging devices installed around the vehicle body and displaying the image on a display device installed in the operator cab.

For example, the hydraulic excavator of patent document 1 includes a lower travel body, an upper swing body rotatably installed on the lower travel body, a work equipment including a bucket, a plurality of cameras for imaging the surroundings of the hydraulic excavator, display means for displaying images captured by the plurality of cameras, and control means for controlling the plurality of cameras and the display means. The control means includes a bird's-eye image generation section that generates a bird's-eye image based on images captured by the plurality of cameras, an image superimposition section that superimposes an overhead image of the hydraulic excavator onto the bird's-eye image generated by the bird's-eye image generation section, and a work equipment display processing section that switches between a first state where the overhead image of the hydraulic excavator displays the work equipment including the bucket and a second state where at least part of the work equipment is hidden.

### Prior Art Document

### Patent Document

Patent Document 1 JP 2020-112030 A

### Summary of the Invention

### Problems to be Solved by the Invention

However, the conventional technology does not consider what information the operator needs according to the state of the work. That is, since the information required by the operator in the operator cab varies depending on the situation, it is conceivable that the operator may not be able to obtain the necessary information sufficiently depending on the installation mode of the cameras and the display mode of the synthesized bird's-eye image.

The present invention has been made in view of the above, and aims to provide a construction machine that can obtain the information required by the operator more accurately.

### Means for Solving the Problems

This application includes a plurality of means for solving the above problems, one example of which is given. A construction machine of the present invention includes: a lower travel body; an upper swing body swingably mounted on the lower travel body; an operator cab mounted on the upper swing body; a plurality of imaging devices including a front imaging device located in a front direction of the upper swing body and a rear imaging device located in a rear direction of the upper swing body; a display device mounted in the operator cab; and a controller configured to generate a bird's-eye image by synthesizing images captured by the imaging devices,
and to display the generated bird's-eye image on the display device.
The front imaging device is installed so as to be tilted downward such that the front imaging device captures a range near the upper swing body relative to the imaging range of the rear imaging device. The controller is configured to generate the bird's-eye image including the images captured by the front imaging device and the rear imaging device.

### Advantages of the Invention

According to the present invention, the operator can obtain the information required more accurately.

### Brief Description of the Drawings

[FIG. 1] FIG. 1 is a side view schematically showing the configuration of a hydraulic excavator, which is an example of a construction machine.
[FIG. 2] FIG. 2 is a diagram showing an example of the arrangement of imaging devices mounted on a hydraulic excavator.
[FIG. 3] FIG. 3 is a functional block diagram showing the functional part related to the synthesis of bird's-eye image in the controller's processing functions, extracted along with related configurations.
[FIG. 4] FIG. 4 is a diagram showing an example of a bird's-eye image display screen displayed on a monitor.
[FIG. 5] FIG. 5 is a diagram showing another example of a bird's-eye image display screen displayed on a monitor. FIG. 5 is a flowchart showing the content of alarm processing by the controller.
[FIG. 6] FIG. 6 is a top view showing an example of the imaging area by the camera.
[FIG. 7] FIG. 7 is a diagram showing the synthesis area of the bird's-eye image.
[FIG. 8] FIG. 8 is a diagram schematically showing the configuration of a remote operation support system.
[FIG. 9] FIG. 9 is a diagram showing an example of a bird's-eye image display screen displayed on a monitor.
[FIG. 10] FIG. 10 is a diagram showing another example of a bird's-eye image display screen displayed on a monitor.

### Modes for Carrying Out the Invention

The embodiments of the present invention will be described below with reference to the drawings. In the following description, a hydraulic excavator is shown as an example of a construction machine, but the present invention can also be applied to other construction machines.

### <First embodiment>

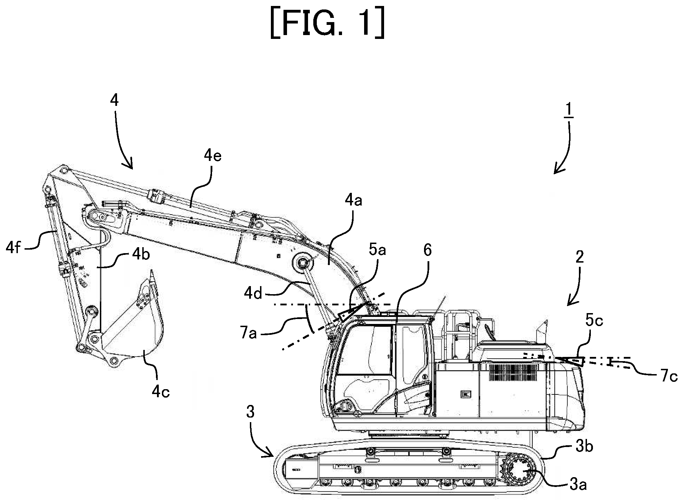

A first embodiment of the present invention will be described with reference to FIGS. 1 to 3.

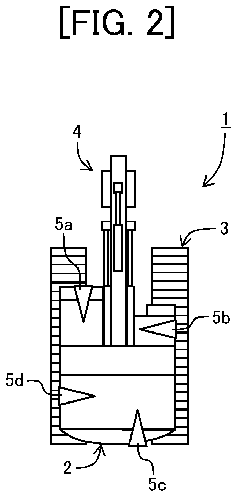

FIG. 1 is a side view schematically showing the configuration of a hydraulic excavator, which is an example of a construction machine according to this embodiment. Also, FIG. 2 is a diagram showing an example of the arrangement of imaging devices mounted on a hydraulic excavator.

As shown in FIG. 1, the hydraulic excavator 1, which is a construction machine, includes a crawler-type lower travel body 3 and an upper swing body 2 swingably mounted on the upper part of the lower travel body 3, which together with the lower travel body 3 constitutes the vehicle body of the construction machine.

The lower travel body 3 has a pair of left and right crawlers 3b wound around idler wheels and drive wheels (only one is shown in FIG. 1), and is driven by left and right travel hydraulic motors 3a connected to the drive wheels via a transmission (only one is shown in FIG. 1).

The upper swing body 2 is driven by the torque generated by a swing hydraulic motor (not shown) and performs a swinging motion in the left-right direction relative to the lower travel body 3.

On the front of the upper swing body 2 (e.g., the left side), an operator cab 6 where the operator boards is installed, and next to the front operator cab 6 of the upper swing body 2 (e.g., the right side), a multi-joint front work equipment 4 for performing formation work such as target terrain is attached. The direction in which the front work equipment 4 of the upper swing body 2 is installed is referred to as the front of the vehicle body.

The front work equipment 4 is configured by connecting a boom 4a, an arm 4b, and a bucket 4c, each of which rotates in the vertical direction, and is driven by a boom cylinder 4d, an arm cylinder 4e, and a bucket cylinder 4f, respectively.

Cameras 5a, 5b, 5c, and 5d for capturing images in each direction are installed as imaging devices at the front, right side (right), rear, and left side (left) of the upper swing body 2. In this embodiment, the front side of the upper swing body 2 is referred to as the front, the right side of the upper swing body 2 as the right, the left side of the upper swing body 2 as the left, and the rear side of the upper swing body 2 as the rear, and the left and right sides are defined for each of the front and rear, and the front and rear sides are defined for each of the left and right. Therefore, for example, cameras 5a, 5b, 5c, and 5d are arranged at four locations which are the left side of the front of the upper swing body 2, the front side of the right side, the right side of the rear side, and the rear side of the left side (see FIG. 2). Additionally, cameras 5a, 5b, 5c, and 5d are installed with the imaging direction facing downward relative to the horizontal direction.

Since the operator cab 6 is arranged on the front left side of the upper swing body 2, the front camera 5a is installed on the top of the operator cab 6. At this time, the front camera 5a is installed so that its front end is behind the foremost part of the operator cab 6. Additionally, the right camera 5b and the left camera 5d are mounted on the upper swing body 2 and are arranged on the top of the exterior cover forming the machine room that houses the hydraulic pump and prime mover. Furthermore, the rear camera 5c is arranged on the top of the counterweight forming the rear end of the upper swing body 2. Moreover, it is arranged at a higher position than the exterior cover and counterweight so that the surroundings of the vehicle body can be visually confirmed from the operator cab 6. That is, the front camera 5a is installed at a higher position than the right camera 5b, rear camera 5c, and left camera 5d.

The front camera 5a and the rear camera 5c are installed such that the angle 7a formed by the front camera 5a with respect to the horizontal direction is larger than the angle 7c formed by the rear camera 5c with respect to the horizontal direction. In other words, the front camera 5a is installed facing downward more than the rear camera 5c.

Similarly, the right camera 5b and the left camera 5d are installed such that the angle formed by the front camera 5a with respect to the horizontal direction is larger than the angles formed by the right camera 5b and the left camera 5d with respect to the horizontal direction. In other words, the front camera 5a is installed facing downward more than the right camera 5b and the left camera 5d.

That is, the front camera 5a is installed facing downward more than any of the right camera 5b, the rear camera 5c, and the left camera 5d.

Note that the angles formed by the front camera 5a, the right camera 5b, the rear camera 5c, and the left camera 5d with respect to the horizontal direction, in other words, the relative angles of cameras 5a, 5b, 5c, and 5d, are installed as described above. This makes it possible to standardize components using similar types of cameras (for example, cameras with similar specifications), but it is not limited to this. For example, when adopting a camera with a sufficiently wide angle of view for the front camera 5a compared to the right camera 5b, rear camera 5c, and left camera 5d, it may be installed so that the angles formed by cameras 5a, 5b, 5c, and 5d with respect to the horizontal direction are the same.

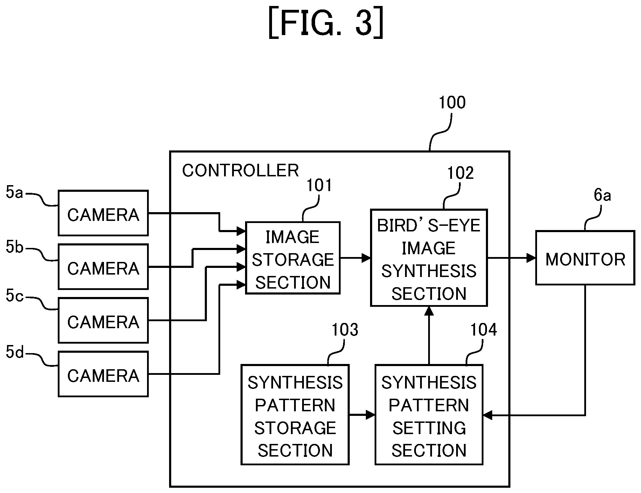

In the operator cab 6, there are operation lever devices (not shown) for driving the boom cylinder 4d, arm cylinder 4e, bucket cylinder 4f, swing hydraulic motor (not shown), and travel hydraulic motor 3a to operate the boom 4a, arm 4b, bucket 4c, upper swing body 2, and lower travel body 3. Additionally, a touch panel monitor 6a (see later in FIG. 3, etc.) is arranged, which has the function of a display device for presenting bird's-eye images and various information synthesized based on images captured by cameras 5a, 5b, 5c, and 5d, showing information around the hydraulic excavator 1 to the operator, and the function of an input device for entering various settings by the operator. Furthermore, a controller 100, which includes the synthesis function for the bird's-eye image of the hydraulic excavator 1 and controls the overall operation of the hydraulic excavator 1, is arranged.

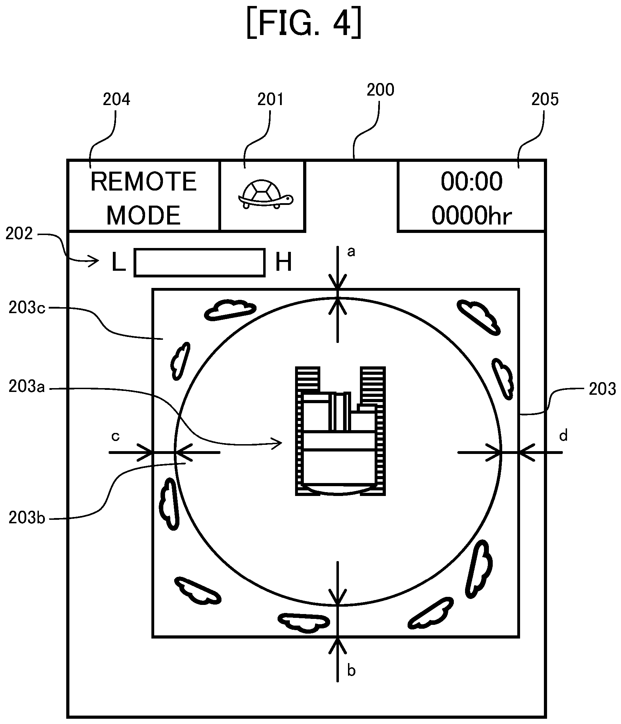

FIG. 3 is a functional block diagram that extracts and shows the functional part related to the synthesis of bird's-eye images among the processing functions of the controller, along with the related configuration. Additionally, FIG. 4 is a diagram showing an example of a bird's-eye image display screen displayed on the monitor.

As shown in FIG. 3, the controller 100 includes an image storage section 101, a bird's-eye image synthesis section 102, a synthesis pattern storage section 103, and a synthesis pattern setting section 104.

The image storage section 101 temporarily stores images captured by the cameras 5a, 5b, 5c, and 5d, which are imaging devices, and outputs them to the bird's-eye image synthesis section 102.

The bird's-eye image synthesis section 102 generates a bird's-eye image of the vehicle surroundings from the images in the image storage section 101 based on the synthesis pattern set by the synthesis pattern setting section 104 from among the plurality of synthesis patterns stored in the synthesis pattern storage section 103, and outputs it to the monitor 6a.

The synthesis pattern setting section 104 allows the operator in the operator cab 6 to select one of the plurality of synthesis patterns stored in the synthesis pattern storage section 103 according to the operation of the monitor 6a, and sets it in the bird's-eye image synthesis section 102.

As shown in FIG. 4, the bird's-eye image display screen 200 displayed on the monitor 6a in the operator cab 6 includes an operation information display section 201 that displays operation information set by the operator, a vehicle information display section 202 that displays vehicle status information, a bird's-eye image display section 203 that displays images of the vehicle surroundings (bird's-eye image), an operation mode display section 204 that displays the operation mode of the hydraulic excavator 1, and a time display section 205 that displays the current time and the operating time of the hydraulic excavator 1.

A bird's-eye image synthesized based on images captured by cameras 5a, 5b, 5c, and 5d is displayed on the bird's-eye image display section 203. The bird's-eye image is generated by synthesizing the ground part 203b (ground) and the sky part 203c, each of which is shot around the vehicle body of the hydraulic excavator 1. In the bird's-eye image display section 203 in FIG. 4, the bird's-eye image is displayed such that the top of the bird's-eye image corresponds to the front of the hydraulic excavator 1, the bottom of the bird's-eye image corresponds to the rear of the hydraulic excavator 1, the right side of the bird's-eye image corresponds to the right side of the hydraulic excavator 1, and the left side of the bird's-eye image corresponds to the left side of the hydraulic excavator 1. Above the center of the bird's-eye image, an icon 203a indicating the hydraulic excavator 1 is positioned.

The bird's-eye image displayed on the bird's-eye image display section 203 is synthesized to include the vicinity of the front and the distant rear of the upper swing body 2. Specifically, the bird's-eye image displayed on the bird's-eye image display section 203 of the monitor 6a is synthesized so that the proportion of the sky, in other words, the width dimensions of the display frame and the sky region in the bird's-eye image display section 203, are larger in the rear (dimension b) and lateral directions (dimensions c, d) than in the front (dimension a).

The effects of the present embodiment configured as described above will be explained.

In conventional technology, there are instances where it is not considered what kind of information the operator needs according to the state of the work. In other words, since the information required by the operator in the operator cab varies depending on the situation, it is conceivable that the operator may not be able to obtain sufficient information depending on the installation mode of the camera or the display mode of the synthesized bird's-eye image. For example, for excavation work using a hydraulic excavator, it is preferable that the area immediately in front of the vehicle body is included in the imaging range, and for the left and right rear, it is preferable that the area farther from the vehicle body is included in the imaging range to prevent contact with surrounding persons during travel or when the upper swing body 2 rotates.

In contrast, the hydraulic excavator 1 (a construction machine) of this embodiment includes a lower travel body 3, an upper swing body 2 mounted on the lower travel body 3 in a swingable manner, an operator cab 6 mounted on the upper swing body 2, cameras 5a, 5b, 5c, and 5d (imaging devices) arranged at least in the front and rear of the upper swing body 2, a monitor 6a (display device) mounted in the operator cab 6, and a controller 100 that synthesizes images captured by the cameras 5a, 5b, 5c, and 5d (imaging devices) to generate a bird's-eye image and displays the generated bird's-eye image on the monitor 6a (display device). The front camera 5a (imaging device) is installed so as to be tilted downward so that it can shoot the area near the upper swing body 2, which is closer to the upper swing body 2 than the imaging range of the rear camera 5c (imaging device). The controller 100 synthesizes a bird's-eye image to be displayed on the monitor 6a (display device) so that the bird's-eye image includes the vicinity of the front and the distant rear of the upper swing body 2. That is, it is configured to generate a bird's-eye image including the images captured by the front camera 5a (imaging device) and the rear camera 5c (imaging device), allowing the operator to obtain the necessary information with greater accuracy.

For example, by imaging the front vicinity of the upper swing body 2 where the front work equipment 4 is extended and presenting it to the operator, the operator can obtain information about the excavation target located in the front vicinity of the upper swing body 2 and the truck or other loading target for the excavation target. In other words, the operator can obtain the necessary information for tasks using the front work equipment 4, such as excavation work and loading work, thereby improving work efficiency.

Additionally, by imaging relatively distant areas behind and to the side of the upper swing body 2 and presenting them to the operator, the operator can obtain information about workers or others approaching the machine from behind or the side of the upper swing body 2, where the front work equipment 4 is not operating. In other words, the operator can early detect workers or others who might come into contact with the machine during reversing or rotating, and can execute contact avoidance actions such as sounding an alarm or stopping the machine before contact occurs.

Furthermore, in this embodiment, the front camera 5a is positioned at the top of the operator cab 6, which is located on the front left side of the upper swing body 2, that is, at a relatively high position of the hydraulic excavator 1, which is a construction machine. Therefore, by capturing images from that high position, it is possible to suppress the obstruction of imaging the excavation target located at the back by objects located more towards the front in front of the upper swing body 2, thereby improving excavation work efficiency.

Additionally, in this embodiment, the front camera 5a is installed so that its front end is positioned behind the foremost part of the operator cab 6. Thus, the operator's view from the operator cab 6 is not obstructed by the front camera 5a. Moreover, it is possible to prevent flying objects (such as mud, sand, pebbles, etc.) that are kicked up during excavation work or travel operations by the hydraulic excavator 1 from colliding with the front camera 5a.

Additionally, in this embodiment, the bird's-eye image displayed on the bird's-eye image display section 203 is configured so that the icon 203a indicating the hydraulic excavator 1 is positioned above the center. In other words, in the bird's-eye image, the display areas to the left, right, and rear display areas of the upper swing body 2, where direct visibility is harder to secure, are more widely secured than the display area in front of the upper swing body 2, where the operator can easily secure direct visibility. Therefore, in the operator's situation confirmation around the upper swing body 2, visibility through the bird's-eye image is improved, allowing for more reliable confirmation of the presence or absence of surrounding obstacles, for example, during reversing or rotating.

In this embodiment, as shown in FIG. 4, the case where the proportion of sky in the bird's-eye image displayed on the monitor 6a is larger in the rear than in the front has been illustrated and described, but this is not limited to this, and various modifications are possible within the scope that does not deviate from the summary of the present invention.

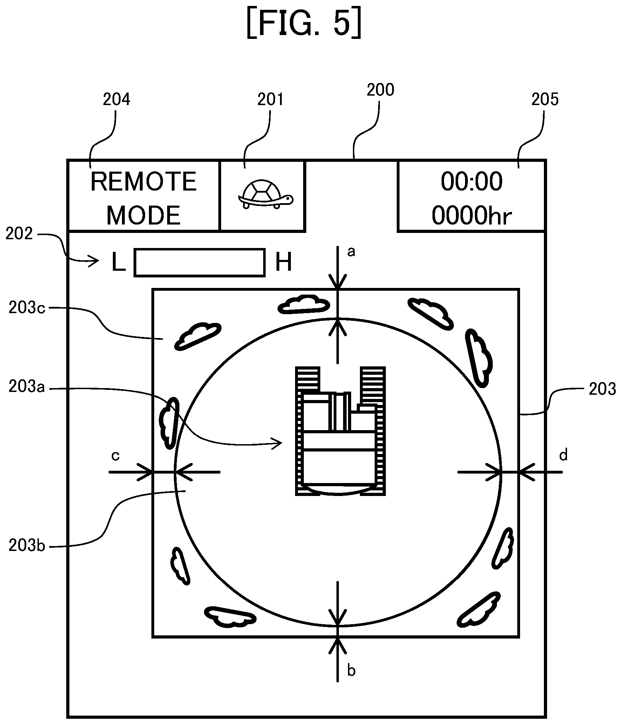

For example, as shown in FIG. 5, the bird's-eye image displayed on the monitor 6a may be configured so that the proportion of sky (the ratio of sky part 203c to ground part 203b) is larger in the front than in the rear. Additionally, the bird's-eye image displayed on the monitor 6a may be configured so that the proportion of sky is larger in the front than in the left and right. Specifically, the bird's-eye image displayed on the bird's-eye image display section 203 of the monitor 6a may be synthesized so that the proportion of sky, in other words, the width dimensions of the display frame and sky region in the bird's-eye image display section 203, are larger in the front (dimension a) and lateral directions (dimensions c, d) than in the rear (dimension b).

### <Second embodiment>

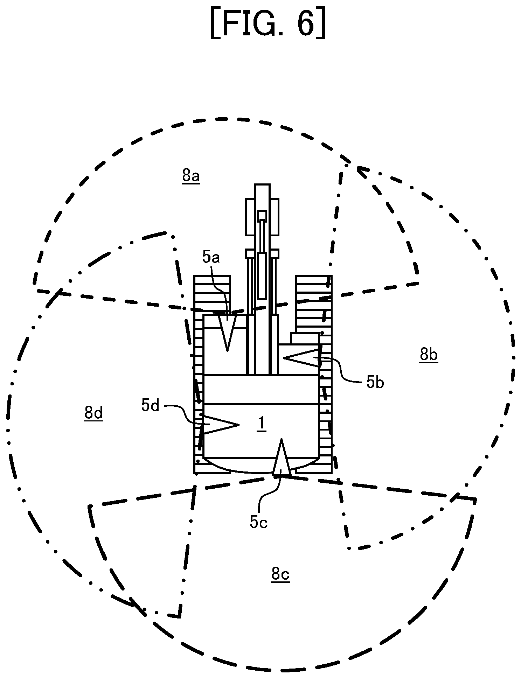

A second embodiment of the present invention will be described with reference to FIGS. 6 to 8.

This embodiment shows the case where an icon indicating the synthesis area of images from cameras 5a, 5b, 5c, and 5d is superimposed on the bird's-eye image displayed on the monitor 6a, which is a display device. In this embodiment, the same reference numerals are assigned to the same configurations as in the first embodiment, and explanations are omitted as appropriate.

FIG. 6 is a top view showing an example of an imaging area by the camera.

As shown in the first embodiment (see FIG. 1), in this embodiment, the front camera 5a is positioned on the front left side, the right camera 5b on the right front side, the rear camera 5c on the rear right side, and the left camera 5d on the left rear side. In this case, as shown in FIG. 6, the right side of the imaging area 8a of the front camera 5a is supplemented by the imaging area 8b of the right camera 5b, the rear side of the imaging area 8b of the right camera 5b is supplemented by the imaging area 8c of the rear camera 5c, the left side of the imaging area 8c of the rear camera 5c is supplemented by the imaging area 8d of the left camera 5d, and the front side of the imaging area 8d of the left camera 5d is supplemented by the imaging area 8a of the front camera 5a.

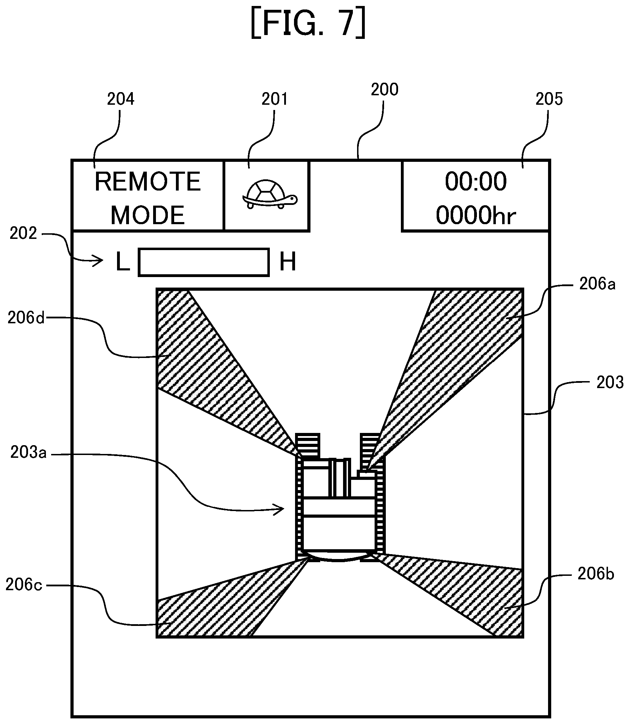

FIG. 7 is a diagram showing the synthesis area of the bird's-eye image.

As shown in FIG. 7, part of the bird's-eye image displayed on the bird's-eye image display section 203 of the bird's-eye image display screen 200 of the monitor 6a includes synthesis areas 206a, 206b, 206c, and 206d obtained by synthesizing overlapping portions of a plurality of images from cameras 5a, 5b, 5c, and 5d. By superimposing an icon (for example, a diagram enclosing the synthesis areas 206a, 206b, 206c, 206d with lines or the like) indicating that they are synthesis areas 206a, 206b, 206c, and 206d onto the bird's-eye image display section 203, it is possible to indicate to the operator that the area is a synthesis area, thereby assisting in the more accurate interpretation of the bird's-eye image.

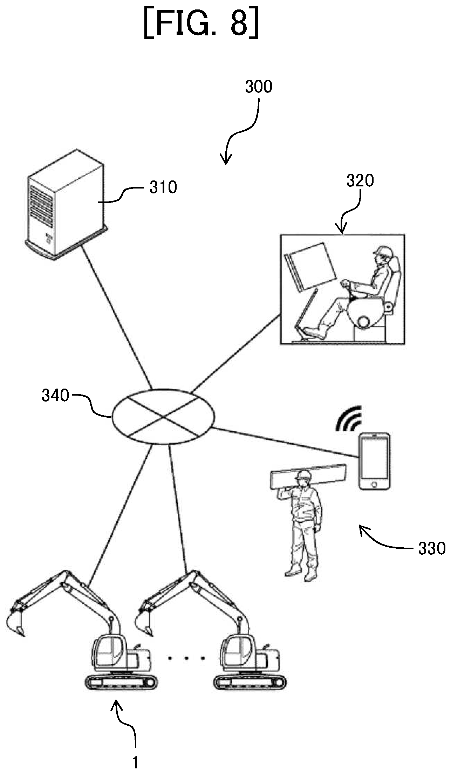

FIG. 8 is a diagram schematically showing the configuration of the remote operation support system.

As shown in FIG. 8, the remote operation support system 300 is composed of a remote operation support server 310 as a remote operation support device, a remote operation device 320 for the operator to remotely operate the construction machine 1, a plurality of construction machines 1 (only two shown) that are the target of remote operation by the remote operation device 320, a plurality of clients 330 (only one shown), and a network 340 for mutual communication between the remote operation support server 310, the remote operation device 320, the client 330, and the construction machine 1. The bird's-eye image from the construction machine 1 is transmitted to the remote operation support server 310 via the network 340, sent to the remote operation device 320, and presented to the operator. The operator performs operations on the construction machine 1 while referring to the bird's-eye image displayed on the remote operation device 320. The remote operation device 320 generates operation signals according to the operator's operations and transmits them to the construction machine 1 via the remote operation support server 310, performing remote operation of the construction machine 1. That is, in the remote operation support system 300, the bird's-eye image is transmitted to the external remote operation support server 310 via the network 340. At the same time, the construction machine 1 receives operation signals generated based on operations by the external operator's remote operation device 320 according to the transmitted bird's-eye image, and operates according to the received operation signals.

Other configurations are the same as in the first embodiment.

In this embodiment configured as described above, the same effects as in the first embodiment can be obtained.

Furthermore, the imaging devices (cameras 5a, 5b, 5c, 5d) in this embodiment are positioned on the upper swing body 2, approximately in the center in the lateral direction. This positioning includes the front camera 5a, positioned to avoid the movable range of the front work equipment 4 that swings vertically. With fewer imaging devices (cameras), it is possible to shoot a sufficient range around the vehicle body and synthesize more accurate bird's-eye images. In other words, the fewer the number of imaging devices, the fewer the synthesis areas in the bird's-eye image, allowing for the provision of a bird's-eye image with less discomfort.

Additionally, by displaying an icon indicating that the area is a synthesis area in the bird's-eye image, it is possible to indicate to the operator that the area is a synthesis area, thereby assisting in the more accurate interpretation of the bird's-eye image.

Particularly, in cases where remote operation is performed as in this embodiment and the operator cannot directly visually confirm the surroundings of the construction machine, it is more effective.

Regarding the installation of the camera, it may be configured so that the front and rear or left and right of all installation positions are reversed. Specifically, it is a case where the front camera is placed on the front right side, the right camera on the right rear side, the rear camera on the rear left side, and the left camera on the left front side. In this case, the left side of the front camera's imaging area is supplemented by the left camera's imaging area, the rear of the left camera's imaging area is supplemented by the rear camera's imaging area, the right side of the rear camera's imaging area is supplemented by the right camera's imaging area, and the front of the right camera's imaging area is supplemented by the front camera's imaging area.

Furthermore, the icons displayed over the bird's-eye image are not limited to those indicating the synthesis area, for example, icons indicating the blind spots of each imaging device may be configured to be displayed over the bird's-eye image.

### <Third embodiment>

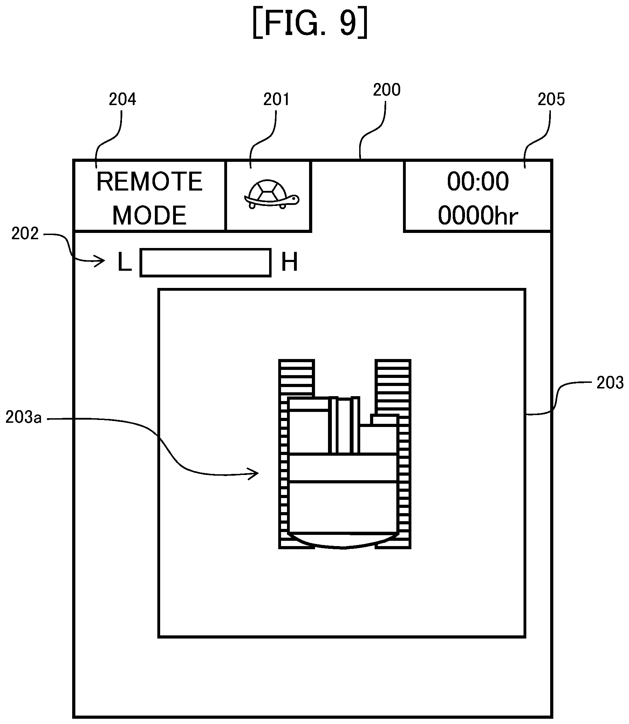

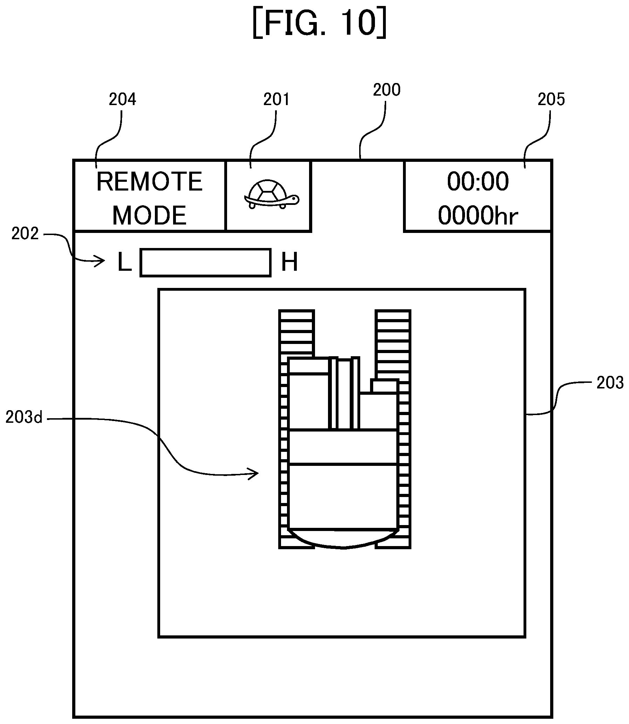

A third embodiment of the present invention will be described with reference to FIGs. 9 and 10.

This embodiment illustrates a case where the mode of icons overlaid on a bird's-eye image is switched according to the operator's operations. In this embodiment, the same reference numerals are assigned to the configurations similar to those in the first and second embodiments, and explanations are omitted as appropriate.

As shown in the first embodiment (see FIG. 3), the controller 100 includes an image storage section 101, a bird's-eye image synthesis section 102, a synthesis pattern storage section 103, and a synthesis pattern setting section 104. The image storage section 101 temporarily stores images captured by the cameras 5a, 5b, 5c, and 5d, which are imaging devices, and outputs them to the bird's-eye image synthesis section 102. The bird's-eye image synthesis section 102 generates a bird's-eye image around the vehicle body from the images in the image storage section 101 based on the synthesis pattern set by the synthesis pattern setting section 104 from among a plurality of synthesis patterns stored in the synthesis pattern storage section 103, and outputs it to the monitor 6a. The synthesis pattern setting section 104 selects one of the plurality of synthesis patterns stored in the synthesis pattern storage section 103 according to the operation of the monitor 6a by the operator in the operator cab 6, and sets it in the bird's-eye image synthesis section 102.

FIG. 9 is a diagram showing an example of a bird's-eye image display screen displayed on the monitor 6a.

As shown in FIG. 9, the bird's-eye image display screen 200 displayed on the monitor 6a of the operator cab 6 includes an operation information display section 201 for displaying operation information set by the operator, a vehicle body information display section 202 for displaying vehicle body information indicating the state of the vehicle body, a bird's-eye image display section 203 for displaying images around the vehicle body (bird's-eye image), an operation mode display section 204 for displaying the operation mode of the hydraulic excavator 1, and a time display section 205 for displaying the current time and the operating time of the hydraulic excavator 1.

The bird's-eye image display section 203 displays a bird's-eye image synthesized from images captured by cameras 5a, 5b, 5c, and 5d based on the synthesis pattern selected according to the operation of the monitor 6a by the operator, and an icon 203a indicating the hydraulic excavator 1 is placed above the center of the bird's-eye image. Various methods can be considered for the selection of synthesis patterns by the operator. For example, it is conceivable to display a list of a plurality of synthesis patterns on the monitor 6a as a display device, and for the operator to select and determine one from the plurality of synthesis patterns displayed on the monitor 6a as an input device.

The display example of the bird's-eye image display screen 200 shown in FIG. 9 illustrates a case (first display pattern) where a bird's-eye image is synthesized using images captured by the front, rear, left, and right cameras 5a, 5b, 5c, and 5d of the hydraulic excavator 1 evenly. In this case, the bird's-eye image is displayed evenly in the front, rear, left, and right directions with respect to the icon 203a, that is, the icon 203a is placed at the center, and the distance from the icon 203a to the outer circumference of the bird's-eye image display section 203 is approximately the same.

FIG. 10 is a diagram showing another example of a bird's-eye image display screen displayed on the monitor.

In FIG. 10, the state of the bird's-eye image display screen 200 is shown when the operator selects a synthesis pattern (second display pattern) with a smaller display range in the front of the bird's-eye image by operating the monitor 6a. Specifically, among the images captured by the front, rear, left, and right cameras 5a, 5b, 5c, and 5d of the hydraulic excavator 1, the display range of the image from the front camera 5a is reduced, and a bird's-eye image is synthesized using the images captured by the other cameras 5b, 5c, and 5d evenly, and displayed on the bird's-eye image display section 203. That is, the bird's-eye image is synthesized by reducing the front image in the front-rear direction without changing the imaging range of the left camera and the right camera.. In this case, as shown in FIG. 10, the icon 203a in the bird's-eye image is displayed evenly in the rear-left and rear-right where the bird's-eye image is displayed evenly, and is enlarged forward in the front where the bird's-eye image is reduced.

Note that the display pattern shown in FIG. 10 (second display pattern) exemplifies a case where the display range of the image from the front camera 5a is reduced, and a bird's-eye image is synthesized using images captured by other cameras 5b, 5c, and 5d equally. However, this is not limited to this, for example, the display range of the image from the front camera 5a can be removed, and a bird's-eye image can be synthesized using images captured by other cameras 5b, 5c, and 5d equally.

Other configurations are the same as those in the first and second embodiments.

Even in the embodiment configured as described above, the same effects as those of the first and second embodiments can be obtained.

In this embodiment, a synthesis pattern (second display pattern) with a small display range in front of the bird's-eye image is selected, and a bird's-eye image is synthesized using the image from the front camera 5a with a reduced display range and images from other cameras 5b, 5c, and 5d with an equal display range, and displayed on the bird's-eye image display section 203. As a result, the display area of the left and right images of the upper swing body 2 in the bird's-eye image is widely secured, improving the operator's visibility, and allowing more reliable confirmation of the presence of obstacles around during rotation.

In addition, in various operations performed with a hydraulic excavator, the operator can select the necessary imaging range for the bird's-eye image according to each operation, allowing the operator to obtain the required information more accurately.

Note that there are various synthesis patterns for the bird's-eye image selected by the operator using monitor 6a (image switching device). For example, if a pattern with a small display range in front of the bird's-eye image is selected on monitor 6a (image switching device), it can be configured to simultaneously display the single image from camera 5a (imaging device) that captures an image of the front of the vehicle body. This allows the recognition of the situation of excavation sites that are difficult to recognize in the bird's-eye image through the single image. This is particularly effective in remote operations where direct visual confirmation of the front is not possible.

Additionally, the synthesis pattern selected on monitor 6a (image switching device) can be configured to include a bird's-eye image synthesis pattern with no image captured by the front camera 5a (i.e., no imaging range at all).

### <Others>

Note that the present invention is not limited to the above embodiments, and includes various modifications within the scope of the invention. For example, the present invention is not limited to those having all the configurations described in the above embodiments, and includes those with some configurations deleted. Additionally, it is possible to add or replace some configurations of one embodiment with configurations of another embodiment. Furthermore, each configuration related to the above controller and the functions and execution processes thereof can be realized in hardware (e.g., designing logic to execute each function in integrated circuits) in whole or in part. Moreover, the configuration related to the above controller may also be a program (software) that realizes each function related to the configuration of the controller by being read and executed by a processing unit (e.g., CPU). Information related to the program can be stored in semiconductor memory (e.g., flash memory, SSD), magnetic storage devices (e.g., hard disk drives), and recording media (e.g., magnetic discs, optical discs).

### Description of Reference Characters

1: Hydraulic excavator (construction machine)
2: Upper swing body
3: Lower travel body
3a: Travel hydraulic motor
3b: Crawler
4: Front work equipment
4a: Boom
4b: Arm
4c: Bucket
4d: Boom cylinder
4e: Arm cylinder
4f: Bucket cylinder
5a,5b,5c,5d: Cameras
6: Operator cab
6a: Monitor
7a,7c: Angle formed
8a,8b,8c,8d: Imaging area
100: Controller
101: Image storage section
102: Bird's-eye image synthesis section
103: Synthesis pattern storage section
104: Synthesis pattern setting section
200: Bird's-eye image display screen
201: Operation information display section
202: Vehicle body information display section
203: Bird's-eye image display section
203a: Icon
203b: Ground part
203c: Sky part
203d: Icon
204: Operation mode display section
205: Time display section
206a,206b,206c,206d: Synthesis area
300: Remote operation support system
310: Remote operation support server
320: Remote operation device
330: Client
340: Network

## Claims

1. A construction machine comprising:
a lower travel body; an upper swing body swingable mounted on the lower travel body; an operator cab mounted on the upper swing body; imaging devices arranged at least in a front direction and a rear direction of the upper swing body; a display device mounted in the operator cab; and a controller that synthesizes images captured by the imaging devices to generate a bird's-eye image and displays the generated bird's-eye image on the display device, wherein
the imaging device arranged in the front direction is installed with a downward inclination to enable the imaging device to capture an image of an area closer to the upper swing body than an imaging area of the imaging device arranged in the rear direction, and
the controller generates the bird's-eye image that includes an image captured by the imaging device arranged in the front direction and an image captured by the imaging device arranged in the rear direction.

2. The construction machine according to claim 1, further comprising:
imaging devices arranged in a left direction and a right direction of the upper swing body, wherein
the imaging device arranged in the front direction is installed with a greater downward inclination than any of the imaging devices arranged in the left direction and the right direction and the imaging device arranged in the rear direction.

3. The construction machine according to claim 1, wherein
the imaging device arranged in the front direction is installed behind a frontmost part of the operator cab.

4. The construction machine according to claim 1, wherein
the controller synthesizes the bird's-eye image so that a proportion of sky occupying the bird's-eye image displayed on the display device is larger in the rear direction of the upper swing body than in the front direction of the upper swing body.

5. The construction machine according to claim 4, wherein
the controller synthesizes the bird's-eye image so that a proportion of sky occupying the bird's-eye image displayed on the display device is larger in each of the left direction and the right direction of the upper swing body than in the front direction of the upper swing body.

6. The construction machine according to claim 1, wherein
the controller places an icon representing the construction machine above a center of the bird's-eye image displayed on the display device.

7. The construction machine according to claim 1, wherein
the imaging devices are arranged at four locations on a left side in the front direction, a front side in the right direction, a right side in the rear direction, and a rear side in the left direction of the upper swing body.

8. The construction machine according to claim 1, wherein
the imaging devices are arranged at four locations on a right side in the front direction, a rear side in the right direction, a left side in the rear direction, and a front side in the left direction of the upper swing body.

9. The construction machine according to claim 7 or 8, further comprising:
a remote operation support system that transmits the bird's-eye image to an outside, receives an operation signal generated based on an operation of an external operator corresponding to the transmitted bird's-eye image, and controls a motion of the construction machine according to the received operation signal.

10. The construction machine according to claim 1, wherein
the controller displays an icon indicating a blind spot of the imaging devices, the icon being overlaid on the bird's-eye image displayed on the display device.

11. The construction machine according to claim 1, further comprising:
an image switching device that, according to an operation of an operator, selectively switches the bird's-eye image between a predetermined first display pattern and a second display pattern in which a display area in the front direction of the upper swing body is smaller than a display area in the first display pattern, the bird's-eye image being displayed on the display device, wherein
the controller synthesizes the bird's-eye image to be displayed on the display device according to the display pattern selected by the image switching device.

12. The construction machine according to claim 11, wherein
when the second display pattern is selected by the image switching device, the controller synthesizes, with the bird's-eye image corresponding to when the first display pattern is selected, a bird's-eye image in which images in the left direction and the right direction of the upper swing body are stretched in a front-rear direction of the upper swing body.

13. The construction machine according to claim 11, wherein
when the second display pattern is selected by the image switching device, the controller displays the image captured by the imaging device arranged in the front direction simultaneously with the bird's-eye image.
